# EUROPÄISCHE PATENTSCHRIFT

(11) **EP 1 101 706 B1**
(45) Veröffentlichungstag und Bekanntmachung des Hinweises auf die Patenterteilung: **26.02.2003**
(21) Anmeldenummer: 99122736.4
(22) Anmeldetag: 16.11.1999
(51) Int. Cl.: B65D 19/12

(54) **Gelenk für faltbare Transportbehälter**
Articulation for collapsible transport containers
Articulation pour récipients de transport pliables

(43) Veröffentlichungstag der Anmeldung: 23.05.2001
(73) Patentinhaber: Ford Global Technologies, Inc., Dearborn, Michigan 48331 (US)
(72) Erfinder: Beckers, Anno Hermann, 50667 Köln (DE)
(74) Vertreter: Bonsmann, Manfred, Dipl.-Ing.

(56) Entgegenhaltungen:
- WO-A-98/17540
- FR-A- 2 153 108

## Beschreibung

Die Erfindung bezieht sich auf ein Gelenk zur Ausbildung einer Schwenkverbindung zwischen zwei Bauteilen, insbesondere zwischen Ober- und Unterteil von Pfosten eines faltbaren Transportbehälters, mit einem länglichen Basisteil, das einen Anschlußabschnitt zur starren Befestigung an einem der Bauteile sowie einen Kopfabschnitt mit einem freien Ende aufweist, und ferner mit einem Schwenkteil, das einen Anschlußabschnitt zur starren Befestigung an dem anderen Bauteil, eine Auflagefläche zur Auflage auf dem freien Ende des Kopfabschnitts des Basisteils sowie einen Schwenkarm aufweist, der in einer verriegelten Endstellung in Längsrichtung vollständig in das Basisteil einsteckbar ist und im Basisteil um einen in diesem festgelegten Lagerbolzen verschwenkbar gelagert ist, wobei das Schwenkteil zur Entriegelung um eine vorgegebene Ausziehstrecke aus dem Basisteil herausziehbar ist und in der Umfangsfläche des Basisteils ein von dessen freiem Ende aus sich zu dessen Anschlußabschnitt hin erstreckender vorzugsweise keilförmiger Schlitz ausgebildet ist, durch den hindurch der Schwenkarm führbar ist.

Transportbehälter mit solchen Gelenken werden zum Beispiel in der Automobilindustrie eingesetzt, um Fahrzeugteile oder vormontierte Baugruppen (z.B. komplette Getriebe) zwischen verschiedenen Werken zu transportieren. Für den Fall, daß die Transportbehälter leer zurückgeführt werden, sind sie faltbar bzw. zusammenlegbar ausgebildet, um die Transportkosten gering zu halten. Innerhalb eines Werkes werden die Transportbehälter von Gabelstaplern transportiert, wobei es häufig an der notwendigen Sorgfalt mangelt. So werden die Transportbehälter über den Boden geschoben, ohne hierfür die für die Gabel vorgesehenen Öffnungen im Traggestell des Transportbehälters zu benutzen. Die faltbaren Seiten bzw. die Endrahmen des Transportbehälters werden häufig durch direkte Stöße der Gabeln beschädigt, was zur Unbrauchbarkeit des Transportbehälters führen kann. Mitunter erleiden auch die transportierten Gegenstände Schäden. Ein Transportbehälter sollte daher eine möglichst große Festigkeit bzw. Steifigkeit aufweisen, um Schäden und Reparaturkosten niedrig zu halten. Andererseits sollten sie Transportbehälter auf sichere und leichte Weise, insbesondere beim Verschwenken der Pfosten, handhabbar sein.

Aus der WO 9817540 A ist ein gattungsgemäßes Gelenk sowie ein mit solchen Gelenken versehenes, zusammenlegbares Transport- und Lagergestell bekannt. Bei einem Teil der dort vorgeschlagenen Ausführungsformen werden die Schwenkteile in ihrer nicht verschwenkten Stellung mit einem separaten Riegelelement verriegelt. Zur Entriegelung muß das Riegelelement in eine Entriegelungsstellung überführt werden, um dem Schwenkteil ein Verschwenken um den Lagerbolzen herum zu ermöglichen. Aufgrund des gesonderten Riegelelementes sind Herstellung und Handhabung des Gelenkes relativ aufwendig. Gemäß einer weiteren durch diese Druckschrift vorgeschlagenen Ausführungsform (Figur 14) ist das Riegelelement einstückig am Schwenkteil angeformt. Hierdurch wird zwar die Handhabung bezüglich der Betätigung des Riegelelementes erleichtert, jedoch hat sich herausgestellt, daß zum Entriegeln des Schwenkteils jeweils Hammerschläge notwendig sind, um Verklemmungen zu lösen. Insbesondere muß beim gleichzeitigen Anheben zweier senkrecht zur Schwenkrichtung nebeneinander angeordneter Schwenkteile, die zum selben Endrahmen des Transportbehälters gehören, auf ein sehr gleichmäßiges Anheben geachtet werden, um ein Verkanten der Schwenkteile und damit deren Hängenbleiben bzw. Blockieren in den Basisteilen zu vermeiden.

Zudem läßt die Biegesteifigkeit des Gelenkes in verriegelter Endstellung noch zu wünschen übrig, wodurch seine Reparaturanfälligkeit verhältnismäßig groß ist. Die vorbekannten Gelenke sind zwar zur Aufnahme hoher Vertikalkräfte ausgelegt, die bei beladenen übereinander gestapelten Transportbehältern auftreten. Die unteren Enden der Pfosten sind jeweils mit einem Aufstellfuß und die oberen Enden der Pfosten jeweils mit einer Aufnahme für einen solchen Aufstellfuß versehen, so daß mehrere solcher Transportbehälter übereinandergestapelt werden können. Die unteren Enden den Pfosten sind jeweils mit einem Standfuß und die oberen Enden der Pfosten jeweils mit einer Aufnahme für einen solchen Standfuß versehen. Die Gelenke müssen jedoch auch hohe Biegemomente aufnehmen können, die aus der Massenträgheit sowie aus geometrischen Imperfektionen der Transportbehälter herrühren. Auch ist die Überführung des Gelenkes von der verschwenkten Stellung in die verriegelte Endstellung mühselig, da das Schwenkteil genau in die Oberseite bzw. das freie Ende des Basisteils eingefädelt werden muß, und dieses häufig mit Probieren, d.h. einem Hin- und Herschieben des Schwenkteils auf der Oberseite des Basisteils, verbunden ist.

Demgegenüber liegt die Aufgabe der vorliegenden Erfindung darin, ein Gelenk der eingangs genannten Art so zu verbessern, daß es bei einfacher Ausbildung eine größere Biegesteifigkeit aufweist und leichter zu handhaben ist.

Erfindungsgemäß wird diese Aufgabe bei einem Gelenk der eingangs genannten Art dadurch gelöst, daß im vollständig ineinandergesteckten Zustand von Schwenkteil und Basisteil sich der Schwenkarm bis in den Anschlußabschnitt des Basisteils hinein erstreckt und zumindest in beiden Endbereichen der Stecklänge Schwenkarm und Basisteil mit einander gegenüberliegenden, zueinander parallelen, konischen, sich zum freien Ende des Basisteils hin erweiternden Flächen versehen sind,
daß ferner die Lage der Auflagefläche am Schwenkteil so gewählt ist, daß sich die konischen Flächen im unbelasteten Zustand des Gelenks gerade noch nicht berühren, und
daß der zur Öffnungsweite des Schlitzes parallele Abstand der konischen Flächen des Schwenkarms ab der Auflagefläche des Schwenkteils längs der Ausziehstrecke größer als die Öffnungsweite ist.

Durch die erfindungsgemäßen Maßnahmen wird der konstruktive Aufbau eines verschwenkbaren Gelenkes erheblich vereinfacht, dabei gleichzeitig dessen Schadensanfälligkeit deutlich verringert und der Zeitaufwand bei der Betätigung des Gelenkes verkürzt. Dadurch, daß sich der Schwenkarm durch das gesamte Basisteil hindurch erstreckt und Anlageflächen zur Abtragung eines Biegemomentes zumindest in den beiden Endbereichen der Stecklänge, d. h. jeweils in den Endbereichen von Schwenkarm und Basisteil, vorgesehen sind, kann ein größtmöglicher Hebelarm zur Abtragung der Biegebeanspruchung genutzt werden. Hieraus resultiert eine geringere örtliche Beanspruchung von Schwenkarm und Basisteil, was wiederum geringere Verformungen oder aber bei gleichbleibenden Verformungen größere aufnehmbare Biegemomente zur Folge hat.

Eine Verklemmung oder Verspannung der gegeneinander gedrückten konischen Flächen von Schwenkteil und Basisteil wird dadurch vermieden, daß die Lage der auf dem freien Ende bzw. auf der Oberseite des Basisteils aufliegenden Auflagefläche des Schwenkteils so gewählt ist, daß zwischen den konischen Flächen im zusammengesteckten Zustand des Gelenkes noch ein geringes Spiel vorhanden ist, so daß sich die konischen Flächen gerade noch nicht berühren. Ein Anheben der Schwenkteile, um diese zu entriegeln, ist daher ohne weiteres möglich. Der Einsatz eines Hammers, beispielsweise zum Lösen des Schwenkteils vom Basisteil, ist nicht notwendig. Aufgrund der konischen Flächen vergrößert sich der Spalt zwischen diesen beim Anheben des Schwenkteils sehr rasch, wodurch sich schnell ein großes Spiel zwischen den konischen Flächen einstellt. Dieses verhindert auch beim ungleichmäßigen Anheben der beiden Schwenkteile der Pfosten eines Endrahmens des Transportbehälters ein Verklemmen der Schwenkteile, da wegen der konischen Form ebenfalls ein Verschwenken in der Ebene der Endrahmen, d.h. senkrecht zur eigentlichen planmäßigen Verschwenkrichtung, möglich ist. Ein Steckenbleiben der Schwenkteile in den Basisteilen ist somit weitestgehend ausgeschlossen.

Da der an die Auflagefläche des Schwenkteils angrenzende konische Bereich des Schwenkteils den Schlitz im Basisteil hintergreift, ist ein gesondertes Riegelelement, weder in separater noch in am Schwenkteil angeformter Ausführung, notwendig, wodurch sich die Fertigung eines erfindungsgemäßen Gelenkes vereinfacht.

Bei einem erfindungsgemäßen Gelenk muß weder ein gesondertes Riegelelement zum Ver- oder Entriegeln betätigt werden, noch ist ein zeitraubendes Suchen der richtigen Stellung des Schwenkteils auf der Oberseite des Basisteils notwendig. Infolge der konischen bzw. trichterförmigen Ausbildung von Schwenkarm und Aufnahmeöffnung für den Schwenkarm im Basisteil zentriert sich das Schwenkteil im Basisteil von selbst.

In einer bevorzugten Ausführungsform der Erfindung weisen das Basisteil und das Schwenkteil jeweils einen rechteckigen Querschnitt mit sowohl parallel als auch senkrecht zur Schwenkrichtung verlaufenden konischen Flächen auf. Hierdurch wird bei einem Anheben des Schwenkteils dessen Abstand zur Innenwandung des Basisteils um den gesamten Umfang herum größer, was das gleichzeitige Anheben der beiden Schwenkteile eines Endrahmens auf einer Stirnseite des Transportbehälters weiter erleichtert.

Dabei ist ganz besonders bevorzugt der Neigungswinkel der parallel zur Schwenkrichtung verlaufenden Flächen größer als der der senkrecht zur Schwenkrichtung verlaufenden Flächen. Beim Anheben der Schwenkteile zu deren Entriegelung ist eine Schwenkmöglichkeit vor allem senkrecht zur eigentlichen Hauptschwenk- bzw. Abklapprichtung des Gelenkes notwendig, um das Anheben eines Endrahmens bei ungleichem Anheben der senkrecht zur Hauptverschwenkrichtung nebeneinander angeordneten Schwenkteile zu erleichtern. Ein Verkanten in der Hauptverschwenkrichtung des Endrahmens tritt dagegen aufgrund der wesentlich kleineren möglichen Exzentrizitäten kaum auf, so daß die gute Handhabbarkeit eines erfindungsgemäßen Gelenkes durch den kleineren Winkel in dieser Richtung nicht beeinflußt wird. Ein kleinerer Winkel bewirkt aber ein Maximum an Steifigkeit für das Gelenk.

In weiterer günstiger Fortbildung der Erfindung weist der Schwenkarm ein längs seiner Längsrichtung verlaufendes Langloch auf, das von einem im Basisteil befestigten Lagerbolzen durchlaufen wird, wobei die Länge des Langlochs zur Ermöglichung der vorgegebenen Ausziehstrecke ausgelegt ist.

In einer ebenso vorteilhaften alternativen Ausführungsform der Erfindung sind an dem Schwenkarm zwei senkrecht zur Schwenkrichtung entgegengesetzt verlaufende miteinander fluchtende Lagerbolzen angeformt, die in jeweiligen im Basisteil ausgebildeten Führungen gleitend gelagert sind, wobei die Lagerbolzen bei Erreichen der vorgegebenen Ausziehstrekke an jeweiligen Endanschlägen zur Anlage kommen.

Mit beiden Alternativen kann auf einfache Weise eine maximale Ausziehstrecke vorgegeben werden und ein ungewolltes vollständiges Herausziehen des Schwenkteils aus dem Basisteil verhindert werden. Außerdem wird auf einfache Weise ein Drehlager ausgebildet.

Bei der zweiten vorstehend beschriebenen Alternative kann der Schwenkarm auf seiner dem Schlitz abgewandten Rückseite mit einem Ausschnitt versehen sein, dessen erster Rand in etwa ab der Höhe der Lagerbolzen unter etwa 15° bis 30°, insbesondere unter 23°, gradlinig zur Mitte des Schwenkarms hin in Richtung Auflagefläche verläuft und zur Anlage an die gegenüberliegende Innenwand des Basisteils vorgesehen ist und dessen anderer Rand vom ersten Rand aus unter etwa 90° nach oben zur Rückseite hin zurückläuft, wobei am Schnittpunkt der beiden Ränder eine Nase ausgebildet ist, die bei Anlage des ersten Randes an der Innenwand des Basisteils deren freien Rand übergreift. Mit diesen Maßnahmen wird zusätzlich zu der Schwenk- bzw. Abklappbewegung des Schwenkteils noch eine Ausstellbewegung in die der Schwenkbewegung entgegengesetzte Richtung möglich. Eine solche Ausstellbewegung ist beispielsweise dann erforderlich, wenn ein Transportbehälter durch einen eingelegten Zwischenboden zwei Ladeebenen aufweist und der Zwischenboden nach Entladung der oberen Ebene durch z. B. einen Gabelstapler entfernt werden muß, damit die untere Ebene entladen werden kann.

In weiterer vorteilhafter Ausgestaltung der Erfindung sind in der freien Endfläche bzw. der Oberseite des Basisteils beidseits des Schlitzes und von diesem durch eine Wand getrennt Aussparungen ausgebildet, die in Schwenkrichtung zum Inneren des Basisteils hin öffnen und in die in verriegelter Endstellung des Schwenkteils jeweils ein am Schwenkarm ausgebildeter Vorsprung hineinragt. Hierdurch wird jedes Aufweiten des Basisteils und damit auch des Schlitzes im Basisteil bei sehr hohen Drücken vermieden.

Bevorzugt ist der beim Verschwenken des Schwenkteils durch den Schlitz hindurchtretende Abschnitt des Schwenkarms zumindest zum Teil konisch ausgebildet und entspricht die Form des Schlitzes dem Profil dieses Abschnitts. Auf diese Weise wird auch im Schlitz durch das Anheben des Schwenkteils aus der verriegelten Endstellung ein großer Spalt zum Basisteil bewirkt, wodurch das Verschwenken des Schwenkarms durch den Schlitz hindurch erleichtert wird.

Vorteilhafterweise sind Basisteil und Schwenkteil aus Temperguß hergestellt. Dieses Material hat ähnliche Eigenschaften wie Stahl. Es kann ohne spezielle Vorbereitungen geschweißt werden. Seine Zugfestigkeit und seine Bruchdehnung sind denen von Stahl ähnlich.

Die vorliegende Erfindung umfaßt auch einen faltbaren Transportbehälter mit einem rechteckigen Boden und einem Pfosten an jeder Ecke des Bodens, wobei jeder Pfosten ein erfindungsgemäßes Gelenk aufweist und ein Teil jedes Pfostens zur Mitte des Bodens hin verschwenkbar ist.

Vorzugsweise sind zwei senkrecht zur Verschwenkrichtung nebeneinander angeordnete Pfosten durch Metallbleche miteinander verbunden. Da alle Teile des Gelenks innerhalb des Pfostens angeordnet sind, ist ein Verbinden zweier Pfosten durch Metallbleche, insbesondere durch gebogene oder profilierte Metallbleche ohne weiteres möglich. Dieses bewirkt ein Maximum an Steifigkeit bei einem Minimum an Material, Einzelteilen, Masse und Montagekosten. Durch diese Wannenkonstruktion erübrigt sich eine Aussteifung mit Vierkantrohren, was ein Maximum an Nutzvolumen bei vorgegebenen Außenabmessungen und eine einfache Gestaltung der Einzelteile ermöglicht.

Die Erfindung wird nachfolgend anhand der Zeichnungen beispielshalber noch näher erläutert. Es zeigen:
- Figur 1: eine Seitenansicht eines Schwenkteils einer ersten Ausführungsform eines erfindungsgemäßen Gelenkes;
- Figur 2: eine Vorderansicht des Schwenkteils aus Figur 1;
- Figur 3: eine Seitenansicht eines Basisteils der ersten Ausführungsform eines erfindungsgemäßen Gelenkes;
- Figur 4: eine Vorderansicht des Basisteils aus Figur 3;
- Figur 5: eine Vorderansicht der ersten Ausführungsform eines erfindungsgemäßen Gelenkes in verriegelter Endstellung;
- Figur 6: eine Vorderansicht des Gelenkes aus Figur 5 in entriegelter Stellung des Schwenkteils;
- Figur 7: eine teilweise geschnittene Seitenansicht des Gelenks aus Figur 5 in verschwenkter Stellung des Schwenkteils;
- Figur 8: eine Seitenansicht eines Schwenkteils einer zweiten Ausführungsform eines erfindungsgemäßen Gelenkes;
- Figur 9: eine Vorderansicht des Schwenkteils aus Figur 8;
- Figur 10: eine Vorderansicht eines Basisteils der zweiten Ausführungsform eines erfindungsgemäßen Gelenkes;
- Figur 11: eine teilweise geschnittene Seitenansicht der zweiten Ausführungsform eines erfindungsgemäßen Gelenkes in verriegelter Endstellung;
- Figur 12: eine Vorderansicht des Gelenkes aus Figur 11 in entriegelter Stellung des Schwenkteils;
- Figur 13: eine Draufsicht auf das Gelenk aus Figur 11 in der entriegelten Stellung aus Figur 12, längs Linie XIII-XIII.
- Figur 14: eine teilweise geschnittene Seitenansicht des Gelenkes aus Figur 11 im verschwenkten Zustand des Schwenkteils;
- Figur 15: eine teilweise geschnittene Seitenansicht des Gelenkes aus Figur 11 im ausgestellten Zustand des Schwenkteils; und
- Figur 16: eine schematische Perspektivansicht eines Endrahmens eines erfindungsgemäßen Transportbehälters in entriegelter Stellung.

Ein erfindungsgemäßes Gelenk 1 weist ein Basisteil 2 und ein gegenüber diesem verschwenkbares Schwenkteil 3 auf, das in das Basisteil 2 einsteckbar und in diesem mittels eines Lagerbolzens 4 verschwenkbar gelagert ist. Das Gelenk 1 dient zur Herstellung zusammenlegbarer bzw. faltbarer Transportbehälter 5. Diese weisen zweiteilige Pfosten 6 auf, deren jeweilige Oberteile 7 bei Leertransport zur Behältermitte hin verschwenkt bzw. abgeklappt werden, um Transportraum zu sparen. Das Basisteil 2 eines erfindungsgemäßen Gelenkes 1 wird mit dem Unterteil 8 eines Pfostens 6 und das Schwenkteil 3 mit dem Oberteil 7 dieses Pfostens 6 starr verbunden.

Das Basisteil 2 ist in den dargestellten Ausführungsbeispielen als längliches Hohlprofil mit offenen Enden und quadratischer Querschnitts-Außenkontur ausgebildet. Es weist einen Anschlußabschnitt 9 auf, dessen Außenabmessungen den Innenabmessungen des Pfosten-Unterteils 8 entsprechen und der somit in das Pfosten-Unterteil 8 einsteckbar ist.

Das Basisteil 2 weist ferner einen Kopfabschnitt 10 auf, dessen Außenabmessungen den Außenabmessungen des Pfostens 6 entsprechen, so daß die Umfangsfläche des Anschlußabschnittes gegenüber der Umfangsfläche des Kopfabschnittes 10 um die Wanddicke des Pfostens 6 zurückspringt. Der Übergang zwischen den Umfangsflächen des Kopfabschnittes 10 und des Anschlußabschnittes 9 ist so ausgebildet, daß eine Schweißnaht zwischen der Oberseite des Pfosten-Unterteils 8 und dem Basisteil 2 gelegt werden kann.

Das dem Anschlußabschnitt 9 abgewandte freie Ende 11 des Kopfabschnitts 10 bildet das freie Ende bzw. die Oberseite des Basisteils aus, die ihrerseits eine Auflagefläche für das Schwenkteil 3 ausbildet. Auf einer Seite des Umfangs des Kopfabschnitts 2 ist ein Schlitz 12 ausgebildet, durch den hindurch ein Abschnitt des Schwenkteils 3 bei dessen Verschwenken geführt werden kann.

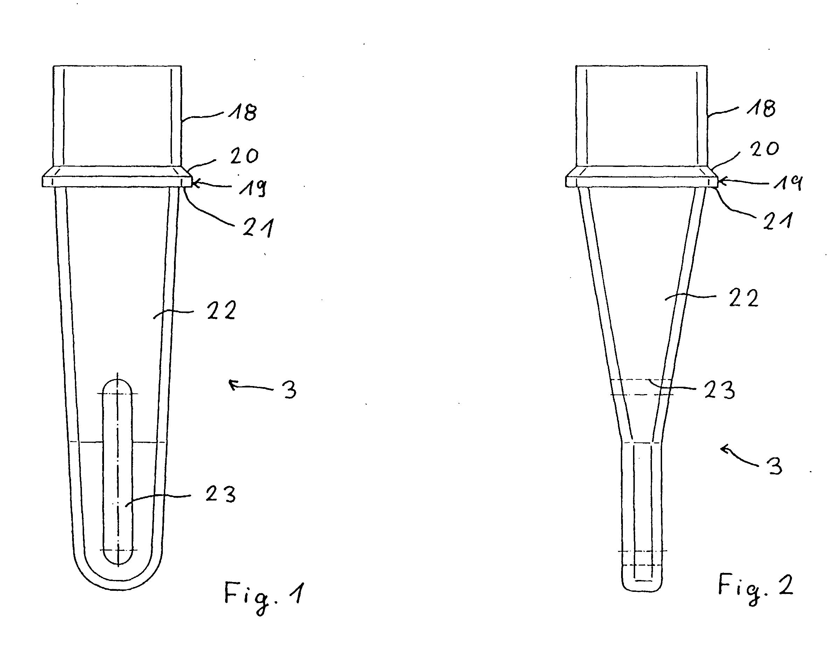

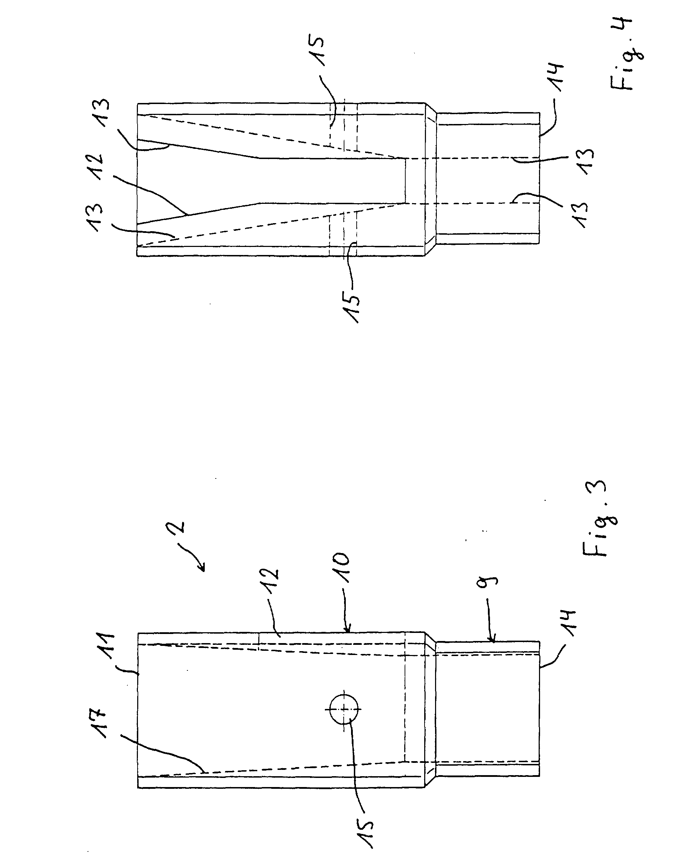

In einer ersten Ausführungsform (Figuren 3 und 4) laufen die senkrecht zum Schlitz verlaufenden Innenwände 13 des Basisteils 2 von dessen Oberseite 11 zunächst, bis etwa zum Übergang zum Anschlußabschnitt 9, konisch unter etwa 10° zur Längsachse des Basisteils 2 aufeinander zu und dann parallel zueinander bis zur Unterseite 14 des Basisteils 2, d. h. bis zum dem Kopfabschnitt 10 abgewandten unteren Ende des Anschlußabschnitts 9. Die Innenkontur des Basisteils 2 verläuft also in einem Schnitt parallel zum Schlitz 12 - senkrecht zur Verschwenkebene des Schwenkteils 3 - in Form eines Y. Nahe dem Übergang der Innenwandung vom konischen zum zueinander parallelen Verlauf sind zwei einander gegenüberliegende, miteinander fluchtende Durchgangsbohrungen 15 zur Aufnahme eines Lagerbolzens 16 ausgebildet. Der Lagerbolzen 16 bildet eine Drehlagerung für das Schwenkteil 3 aus, wobei die Längsachse des Lagerbolzens 16 die Verschwenkachse des Schwenkteils 3 definiert.

Auch der Schlitz 12 weist die Kontur eines Y auf und entspricht im wesentlichen dem unteren Teil der konisch und dann zueinander parallel verlaufenden Innenwandung 13 des Basisteils 2.

In einem Schnitt parallel zur Verschwenkachse laufen die beiden parallel zum Schlitz verlaufenden Innenwandungen 17 von der Oberseite 11 des Basisteils 2 bis zu dessen Unterseite 14 durchgehend konisch aufeinander zu. Der Neigungswinkel dieser Innenwandungen zur Vertikalen ist kleiner als der Neigungswinkel der senkrecht zum Schlitz 12 verlaufenden konischen Innenwandung 13 und kann beispielsweise 3° betragen.

Das zugehörige Schwenkteil 3 (Figuren 1 und 2) besteht aus einem Anschlußabschnitt 18, dessen Außenabmessungen den Innenabmessungen des das Pfosten-Oberteil 7 bildenden Hohlprofils entsprechen, so daß der Anschlußabschnitt 18 in das Pfosten-Oberteil 7 einsteckbar ist.

An den Anschlußabschnitt 18 schließt sich ein seitlich von diesem vorragender umlaufender Ring 19 an, dessen dem Anschlußabschnitt 18 zugewandte Oberseite 20 abgeschrägt ist und somit eine Fase zum Legen einer Schweißnaht ausbildet, mit der das Schwenkteil 3 an das Pfosten-Oberteil 7 angeschweißt werden kann. Die dem Anschlußabschnitt 18 abgewandte Unterseite 21 des Rings 19 bildet eine, im vorliegenden Fall ebene, Auflagefläche aus, die im zusammengesetzten Zustand von Basisteil 2 und Schwenkteil 3 auf der Oberseite 11 des Basisteils 2 aufliegt und zur Übertragung der auftretenden Vertikalkräfte ausgelegt ist.

An den Ring 19 schließt sich ein Schwenkarm 22 an, dessen Außenabmessungen den Innenabmessungen des Basisteils 2 entsprechen und der in dieses vollständig einsteckbar ist. In dem dem Anschlußabschnitt 18 abgewandten Bereich des Schwenkarms 22 ist ein Langloch 23 ausgebildet, das sich in Längsrichtung des Schwenkteils 3 von ungefähr der Mitte des Schwenkarms 22 bis in die Nähe dessen freien Endes erstreckt und zur Aufnahme des Lagerbolzens 16 ausgelegt ist. Die Länge des Langloches 23 bestimmt die mögliche Ausziehstrecke, um die das Schwenkteil 3 aus dem Basisteil 2 nach oben herausgezogen werden kann.

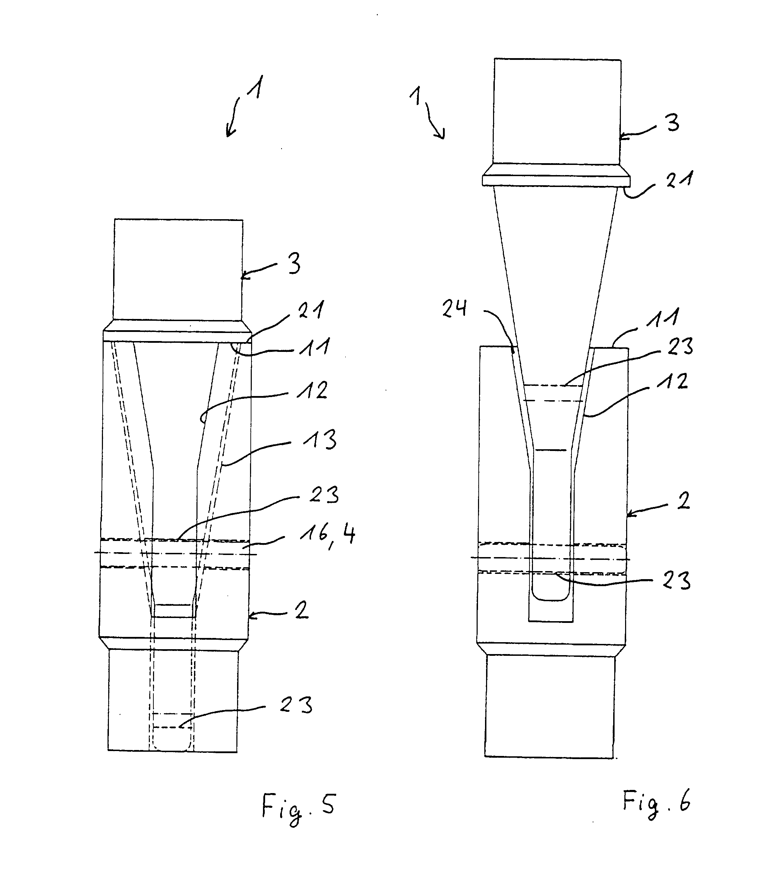

Figur 5 zeigt das Schwenkteil 3 und das Basisteil 2 im vollständig ineinandergesteckten Zustand, d. h. in der verriegelten Endstellung. Hierbei liegt der Ring 19 des Schwenkteils 3 mit seiner Auflagefläche 21 auf der Oberseite 11 des Basisteils 2 auf und durchläuft der Schwenkarm 22 das Basisteil 2 im wesentlichen vollständig. Die Lage der Auflagefläche 21 des Ringes 19 ist in Bezug auf den Schwenkarm 22 so gewählt, daß die Außenwandung des Schwenkarms 22 die Innenwandung 13, 17 des Basisteils 2 im vollständig ineinandergesteckten Zustand gerade noch nicht berührt und somit dort noch etwas Spiel vorhanden ist. Die endgültige verriegelte Stellung des Schwenkteils 3 wird daher durch den Ring 19 gesteuert. Der Lagerbolzen 16 liegt an dem dem Ring 19 zugewandten oberen Ende des Langloches 23 an. Das Schwenkteil 3 ist in dieser Stellung verriegelt, da die öffnungsweite des Schlitzes 12 kleiner ist als die Querschnittsbreite des Schwenkarms 22 in diesem Bereich, so daß der Schwenkarm 22 nicht durch den Schlitz 12 hindurchtreten kann. Gesonderte Riegelelemente sind daher nicht notwendig.

Zum Entriegeln des Schwenkteils 3 wird dieses um eine vorgegebene Strecke, beispielsweise um 65 mm bei einer Steck- bzw. Sitzlänge von 150 mm, aus dem Basisteil 2 herausgezogen bzw. -angehoben, so daß der Lagerbolzen 16 am unteren Ende des Langloches 23 anliegt (Figur 6). Die Anhebebewegung beträgt somit weniger als die Hälfte der Sitzlänge. In dieser angehobenen Stellung liegt der untere Bereich des Schwenkarms 22 dem Schlitz 12 gegenüber. Da die Kontur des Schlitzes 12 - wie oben beschrieben - der Kontur dieses unteren Bereiches des Schwenkarms 22 entspricht, kann der Schwenkarm 22 nunmehr durch den Schlitz 12 hindurchgeführt bzw. verschwenkt werden.

Aufgrund der konischen Ausbildung von Schwenkarm 22 und Innenwandung 13, 17 des Basisteils 2 entsteht beim Anheben des Schwenkarms 22 schnell ein großer Spalt 24, der ein Hängen- bzw. Steckenbleiben des Schwenkteils 3 im Basisteil 2 weitestgehend verhindert.

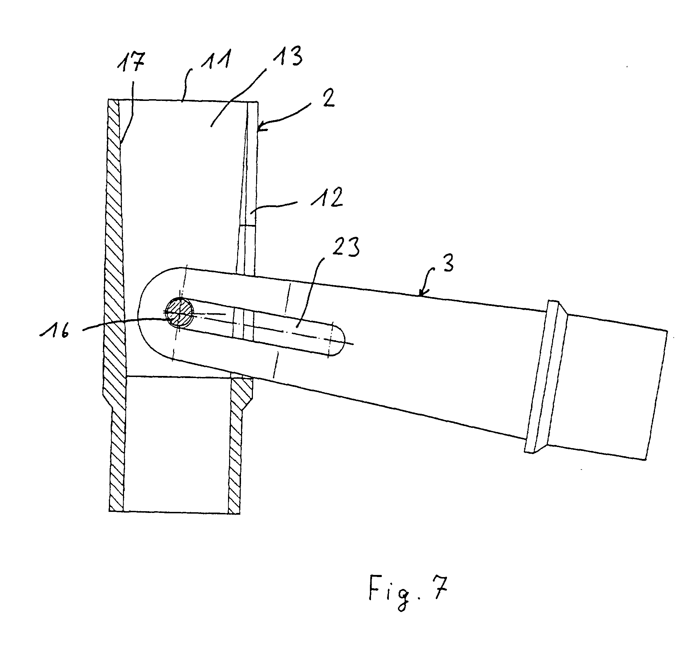

In Figur 7 ist das Gelenk 1 mit vollständig verschwenktem Schwenkteil 3 dargestellt. Der Schwenk- bzw. Abklappwinkel beträgt im dargestellten Beispiel etwa 100°. In die Oberseite 11 des Basisteils 2 kann nun der Aufstellfuß eines darüber zu stapelnden Transportbehälters eingeführt werden.

Soll das Schwenkteil 3 wieder in die verriegelte Endstellung zurückgeführt werden, muß es nur nach oben verschwenkt werden, wodurch es aufgrund seiner konischen Ausbildung und der konisch verlaufenden Innenwandung 13, 17 des Basisteils 2 sich selbst in das Basisteil 2 einfädelt und in die richtige Stellung im Basisteil 2 hineingleitet, ohne daß ein zeitraubendes Suchen der richtigen Lage von Basisteil 2 und Schwenkteil 3 zueinander notwendig ist.

Basisteil 2 und Schwenkteil 3 sind aus Temperguß hergestellt. Dieser ist ebenso gut schweißbar wie Stahl und weist auch ähnliche Werte wie Stahl bezüglich Zugfestigkeit und Bruchdehnung auf.

Basisteil 2 und Schwenkteil 3 sind mit gerundeten Ecken ausgeführt, was in den Figuren durch Hilfslinien angedeutet ist.

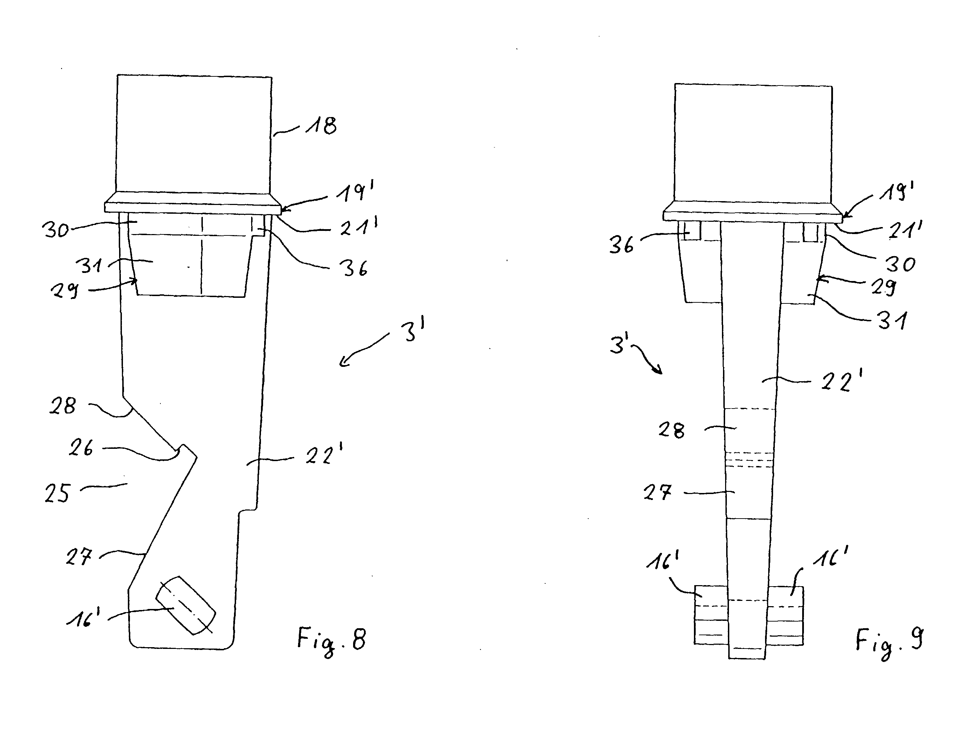

Ein weiteres Ausführungsbeispiel ist in den Figuren 8 bis 15 dargestellt. Der wesentliche Unterschied zum in den Figuren 1 bis 7 dargestellten Ausführungsbeispiel besteht darin, daß das Schwenkteil 3' entgegen der eigentlichen Schwenk- oder Abklappbewegung, die durch den Schlitz 12 im Basisteil 2 erfolgt, um einen vorgegebenen Winkel zur Längsachse des Basisteils 2 ausgestellt, d. h. geneigt und arretiert werden kann.

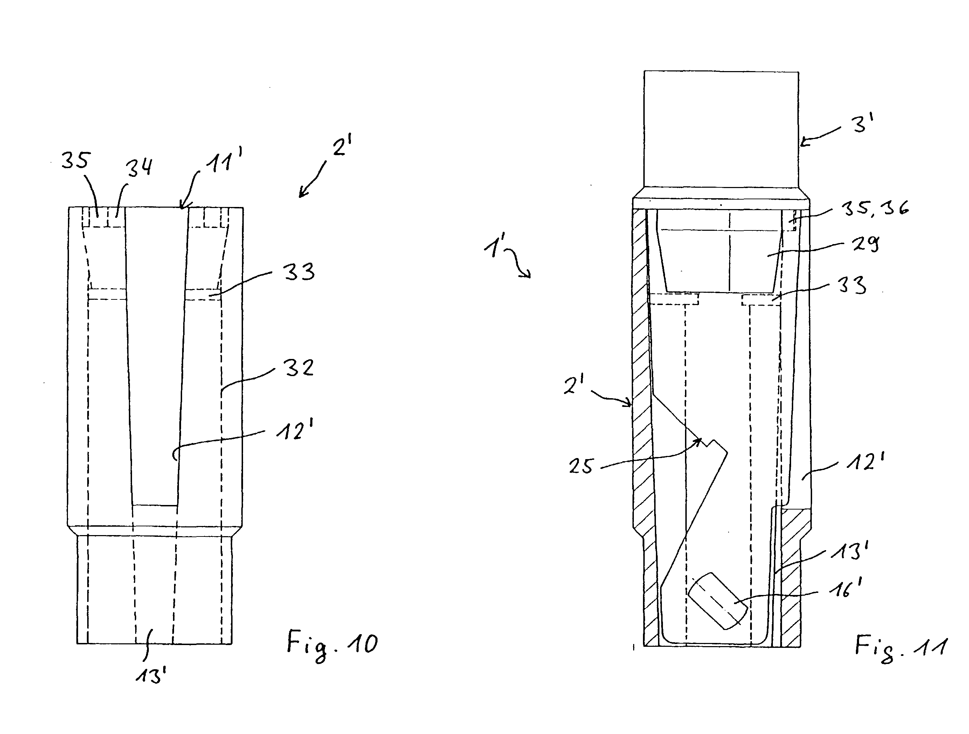

Der Querschnitt des Schwenkarms 22' (Figuren 8 und 9) ist in diesem Fall als längliches Rechteck ausgebildet, dessen Langseiten parallel und dessen Schmalseiten senkrecht zur Schwenkebene des Schwenkteils 3' verlaufen. Der Rechteckquerschnitt verjüngt sich zum freien Ende des Schwenkarms 22' hin, so daß dieser allseitig konisch ausgebildet ist. Die dem Schlitz 12' im Basisteil 2' zugewandte Schmalseite ist in ihrem oberen, an den Ring 19 angrenzenden Bereich in dem Schlitz 12' aufgenommen. Demgegenüber ist der untere, an das freie Ende angrenzende Bereich der Schmalseite zurückgesetzt, so daß dieser Bereich der Innenwandung 13' des Basisteils 2' gegenüberliegt.

Die dem Schlitz 12' abgewandte Schmalseite des Schwenkarms 22' weist einen im wesentlichen dreieckförmigen Ausschnitt 25 auf, wobei in der Spitze des Dreiecks ein Haken bzw. eine Nase 26 ausgebildet ist, die den oberen, freien Rand 11' des Basisteils 2' im angehobenen und ausgestellten Zustand des Schwenkteils 3' übergreifen kann. Etwa ab der Oberseite der Lagerbolzen 16' verläuft ein Rand 27 des Ausschnitts 25 unter etwa 23° gradlinig zur Mitte des Schwenkarms 22' in Richtung Ring 19' und von dort aus ein zweiter Rand 28 unter Ausbildung der erwähnten Nase 26 unter etwa 90° nach oben und zur rückwärtigen Schmalseite zurück. Der gradlinige unter 23° verlaufende Ausschnittsrand 27 liegt bei ausgestelltem Schwenkteil 3' an der Innenwandung des Basisteils 2' an, so daß das Schwenkteil 3' in diesem Zustand etwa 23° zur dem Schlitz 12' abgewandten Seite hin geneigt ist (Figur 15).

Der Lagerbolzen 16' ist hierbei einstückig an den Schwenkarm 22' angeformt, und zwar in Form zweier, auf den Langseiten einander gegenüberliegender Vorsprünge. Die Vorsprünge sind als längliches Rechteck ausgebildet, wobei die Langseiten unter 45° zur Längsachse des Schwenkteils 3' verlaufen und die Schmalseiten abgerundet sind.

In dem an den Ring 19' angrenzenden Bereich der Langseiten des Schwenkarms sind beidseitig Backen 29 ausgebildet. Diese Backen 29 weisen jeweils einen schmalen, etwa 10 mm breiten, sich an die Auflagefläche 21' des Ringes 19' anschließenden Streifen 30 mit einer parallel zur Längsachse verlaufenden Außenfläche auf. Auf der dem freien Ende des Schwenkarms 22' zugewandten Seite dieses Streifens 30 schließt sich ein konisch sich zum freien Ende des Schwenkarms 22' hin verjüngender Abschnitt 31 an, dessen Außenfläche um etwa 10° zur Längsachse geneigt ist.

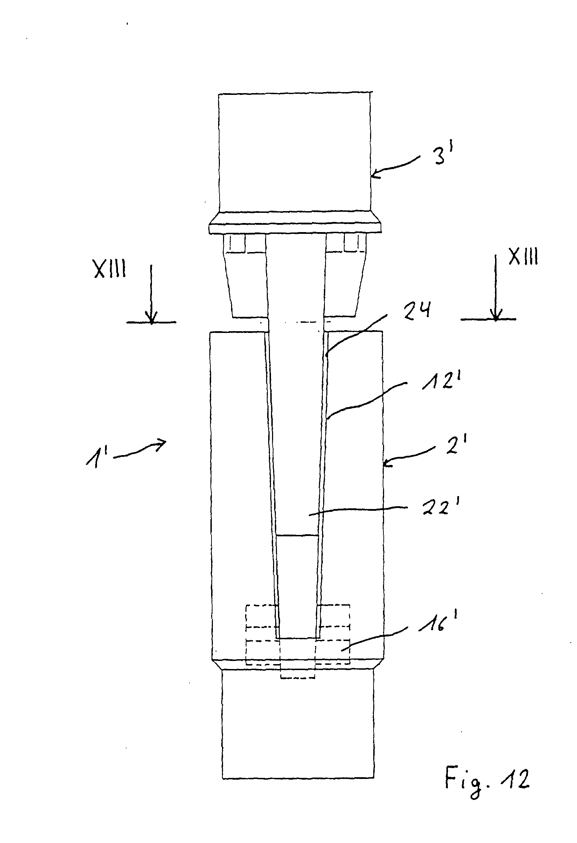

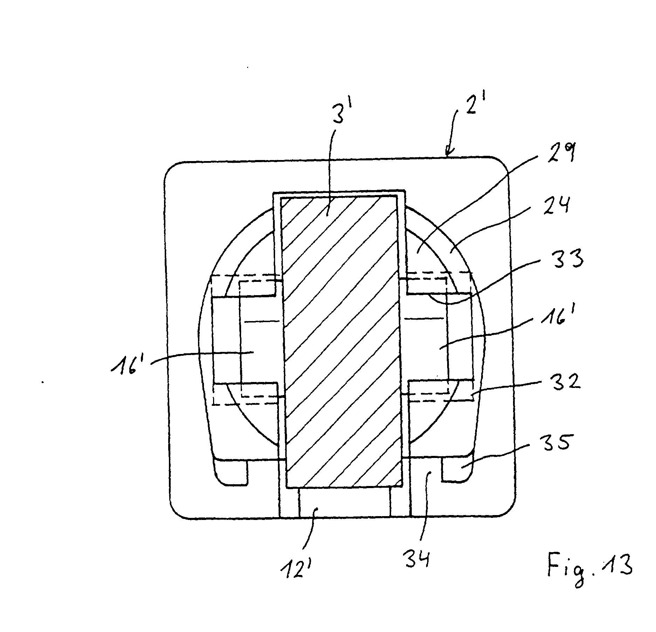

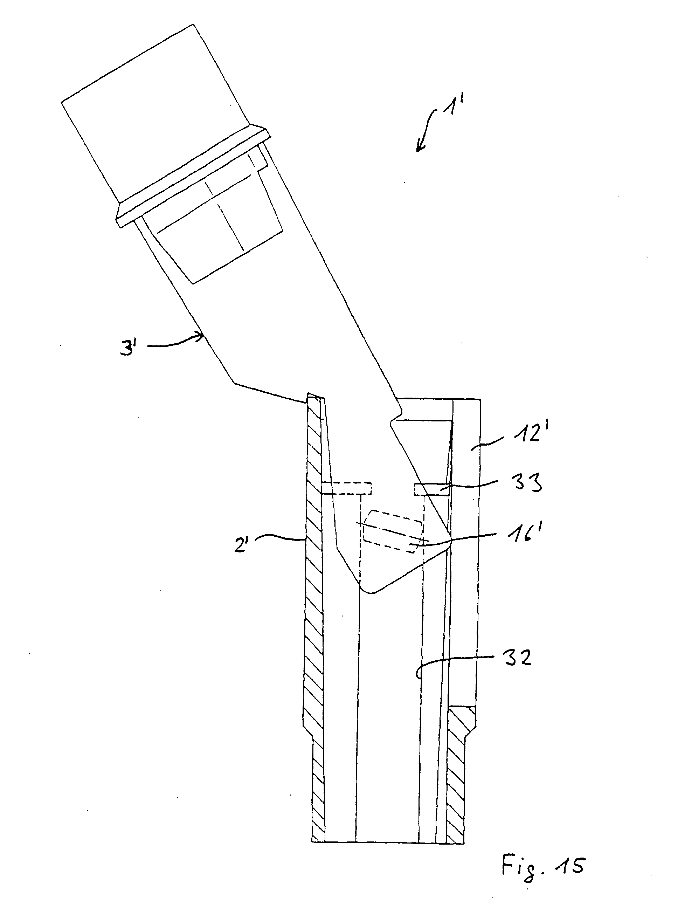

Im Inneren des Basisteils 2' (Figur 10) sind für die Schmalseiten des Schwenkarms 22', mit Ausnahme des an der rückwärtigen Schmalseite ausgebildeten Ausschnitts 25, sowie für die an den Langseiten des Schwenkarms 22' ausgebildeten Bakken 29 entsprechend konisch ausgebildete Innenwandungen 13', 31 ausgebildet. Auch hier ist die Lage der Auflagefläche 21' des Ringes 19' des Schwenkteils 3' so gewählt, daß die einander gegenüberliegenden konischen Flächen von Schwenkarm 22' und Basisteil 2' sich in der verriegelten Endstellung (Figur 11) gerade nicht berühren, sondern mit einem geringen Spiel einander gegenüberliegen. Die angehobene, entriegelte Stellung (Figur 12) sowie die Verschwenk- bzw. Abklappstellung (Figur 14) entspricht denen der ersten Ausführungsform.

Für die an den Schwenkarm 22' angeformten Lagerbolzen 16' ist im Inneren des Basisteils 2' jeweils eine Führungsbahn 32 ausgebildet, deren der Oberseite des Basisteils 2' zugewandte Enden durch als in die Führungsbahn 32 hineinragende Vorsprünge 33 ausgebildete Endanschläge versperrt sind, so daß ein Herausziehen des Schwenkteils 3' aus dem Basisteil 2' bei einem Anheben des Schwenkteils 3' längs seiner Längsachse nicht möglich ist. Der Abstand zwischen den einander gegenüberliegenden Vorsprüngen 33 einer Führungsbahn 32 ist so ausgelegt, daß die Lagerbolzen 16' mit ihrer Schmalseite, d. h. bei 45°-Neigung des Schwenkteils 3', durch den Zwischenraum hindurchführbar sind. Auf diese Weise ist ein einfaches Montieren oder Auseinandernehmen des Gelenkes 1' möglich.

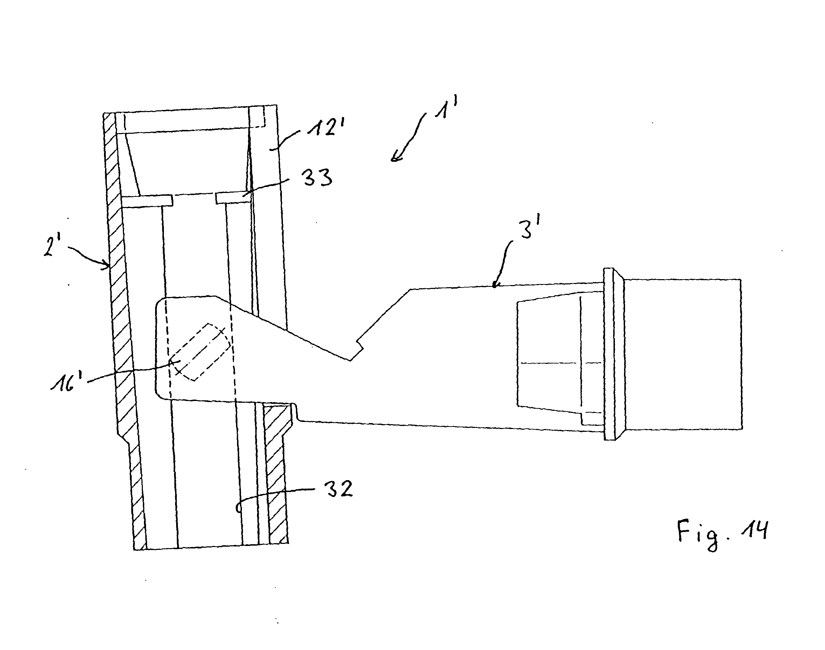

In der Oberseite 11' des Basisteils 2' ist in den Wänden neben dem Schlitz 12' und von diesem durch einen Wandabschnitt 34 getrennt jeweils eine Aussparung 35 ausgebildet, die parallel zur Verschwenkrichtung des Schwenkteils 3' zum Inneren des Basisteils 2' hin öffnet (Figur 13). In diese Aussparungen 35 greifen in der verriegelten Endstellung des Schwenkteils 3' Vorsprünge 36 ein, die an dem Schwenkarm 22' im Bereich des an die Auflagefläche 21' des Ringes 19' anschließenden schmalen Streifens 30 ausgebildet sind. Hierdurch wird ein Aufweiten des Basisteils 2' unter Belastung verhindert.

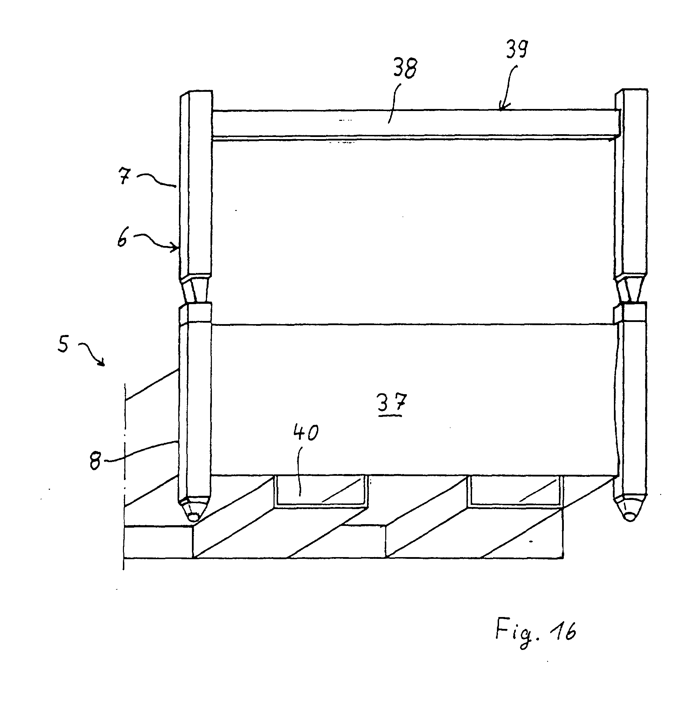

Da bei einem erfindungsgemäßen Gelenk alle Funktionsteile innerhalb des Umrisses der Pfosten 6 angeordnet sind, können die Pfosten 6 eines Transportbehälters 5 mit Metallblechen 37 untereinander verbunden werden (Figur 16). Hierdurch wird ein Maximum an Steifigkeit bei einem minimalen Aufwand an Material, Einzelteilen, Gewicht und Montagekosten erreicht. Dieses gilt insbesondere, wenn die Pfosten mit gebogenen bzw. profilierten Metallblechen verbunden werden.

Die beiden senkrecht zur Verschwenkrichtung nebeneinander stehenden Pfosten 6 einer Stirnseite eines Transportbehälters 5 sind üblicherweise über einen Querholm 38 zu einem Endrahmen 39 miteinander verbunden. Eine zusätzliche Verbindung der Pfosten 6 eines solchen Endrahmens 39 mit Metallprofilblechen 37 verringert die Empfindlichkeit gegen eine rauhe Behandlung mit Gabelstaplern, d. h. Nichtbenutzung der für die Gabeln vorgesehenen Öffnungen 40, erheblich und reduziert so die Anzahl der notwendigen Reparaturen beträchtlich.

## Patentansprüche

1. Gelenk zur Ausbildung einer Schwenkverbindung zwischen zwei Bauteilen, insbesondere zwischen Ober- und Unterteil von Pfosten (6) eines faltbaren Transportbehälters (5), mit einem länglichen Basisteil, das einen Anschlußabschnitt (9) zur starren Befestigung an einem der Bauteile sowie einen Kopfabschnitt (10) mit einem freien Ende (11, 11') aufweist, und mit einem Schwenkteil (33'), das einen Anschlußabschnitt zur starren Befestigung an dem anderen Bauteil, eine Auflagefläche (21,21') zur Auflage auf dem freien Ende (11,11') des Kopfabschnitts (10) des Basisteils (2,21) sowie einen Schwenkarm (22,22') aufweist, der in Längsrichtung vollständig in das Basisteil (2,2') einsteckbar ist und im Basisteil (2,2') um einen in diesem festgelegten Lagerbolzen (16,16') verschwenkbar gelagert ist, wobei das Schwenkteil (3,3') um eine vorgegebene Ausziehstrecke aus dem Basisteil (2,21) herausziehbar ist und in der Umfangsfläche des Basisteils (2,23) ein von dessen freiem Ende (11,11') aus sich zu dessen Anschlußabschnitt (9) hin erstreckender Schlitz (12,12') ausgebildet ist, durch den hindurch der Schwenkarm (22,22') führbar ist, **dadurch gekennzeichnet,**
**daß** in vollständig ineinandergestecktem Zustand von Schwenkteil (3, 3') und Basisteil (2, 2') sich der Schwenkarm (22, 22') bis in den Anschlußabschnitt (9) des Basisteils (2, 2') hinein erstreckt und zumindest in beiden Endbereichen der Stecklänge Schwenkarm (22,22') und Basisteil (2, 2') mit einander gegenüberliegenden, zueinander parallelen, konischen, sich zum freien Ende (11) des Basisteils (2, 2') hin erweiternden Flächen (13, 17, 13', 31) versehen sind,
**daß** die Lage der Auflagefläche (21, 21') am Schwenkteil (3, 3') so gewählt ist, daß sich die konischen Flächen im unbelasteten Zustand des Gelenks (1, 1') gerade noch nicht berühren, und
**daß** der zur Öffnungsweite des Schlitzes (12, 12') parallele Abstand der konischen Flächen des Schwenkarms (22, 22') ab der Auflagefläche (21, 21') des Schwenkteils (3, 3') längs der Ausziehstrecke größer als die Öffnungsweite ist.

2. Gelenk nach Anspruch 1, **dadurch gekennzeichnet, daß** das Basisteil (2, 2') und das Schwenkteil (3, 3') jeweils einen rechteckigen Querschnitt mit sowohl parallel als auch senkrecht zur Schwenkrichtung verlaufenden konischen Flächen aufweisen.

3. Gelenk nach Anspruch 2, **dadurch gekennzeichnet, daß** der Neigungswinkel der parallel zur Schwenkrichtung verlaufenden Flächen größer als der der senkrecht zur Schwenkrichtung verlaufenden Flächen ist.

4. Gelenk nach einem der Ansprüche 1 bis 3, **dadurch gekennzeichnet, daß** der Schwenkarm (22) ein längs seiner Längsrichtung verlaufendes Langloch (23) aufweist, das von einem im Basisteil (2) befestigten Lagerbolzen (16) durchlaufen wird, wobei die Länge des Langlochs (23) zur Ermöglichung der vorgegebenen Ausziehstrecke ausgelegt ist.

5. Gelenk nach einem der Ansprüche 1 bis 3, **dadurch gekennzeichnet, daß** am Schwenkarm (22') zwei senkrecht zur Schwenkrichtung entgegengesetzt verlaufende, miteinander fluchtende Lagerbolzen (16') angeformt sind, die in jeweiligen im Basisteil (2') ausgebildeten Führungen (32) gleitend gelagert sind, wobei die Lagerbolzen (16') bei Erreichen der vorgegebenen Ausziehstrecke an jeweiligen Endanschlägen (33) zur Anlage kommen, und
daß der Schwenkarm (22') auf seiner dem Schlitz (12') abgewandten Rückseite mit einem Ausschnitt (25) versehen ist, dessen erster Rand (27) in etwa ab der Höhe der Lagerbolzen (16') unter etwa 15° bis 30° geradlinig zur Mitte des Schwenkarms (22') hin in Richtung Auflagefläche (21') verläuft und zur Anlage an die gegenüberliegende Innenwand des Basisteils vorgesehen ist und dessen zweiter Rand (28) vom ersten Rand (27) aus unter etwa 90° nach oben zur Rückseite hin zurückläuft, wobei am Schnittpunkt der beiden Ränder (27, 28) eine Nase (26) ausgebildet ist, die bei Anlage des ersten Randes (27) an der Innenwand des Basisteils (2') dessen freien Rand (11') übergreift.

6. Gelenk nach Anspruch 5, **dadurch gekennzeichnet, daß** in der freien Endfläche (11') des Basisteils (2') beidseitig des Schlitzes (12') und von diesem durch eine Wand (34) getrennt Aussparungen (35) ausgebildet sind, die in Schwenkrichtung zum Inneren des Basisteils (2') hin öffnen und in die bei Auflage der Auflagefläche (21') des Schwenkteils (3') auf dem freien Ende (11') des Basisteils (2') jeweils ein am Schwenkarm (22') ausgebildeter Vorsprung (36) hineinragt.

7. Gelenk nach einem der Ansprüche 1 bis 6, **dadurch gekennzeichnet, daß** der beim Verschwenken des Schwenkteils (3, 3') durch den Schlitz (12, 12') hindurchtretende Abschnitt des Schwenkarms (22, 22') zumindest zum Teil konisch ausgebildet ist und die Form des Schlitzes (12, 12') dem Profil dieses Abschnitts entspricht.

8. Gelenk nach einem der Ansprüche 1 bis 7, **dadurch gekennzeichnet, daß** das Basisteil (2, 2') und das Schwenkteil (3, 3') aus Temperguß hergestellt sind.

9. Faltbarer Transportbehälter mit einem rechteckigen Boden und einem Pfosten an jede Ecke des Bodens, **dadurch gekennzeichnet, daß** jeder Pfosten (6) ein Gelenk (1, 1') nach einem der Ansprüche 1 bis 8 aufweist und ein Teil (7) jedes Pfostens (6) zur Mitte des Bodens hin verschwenkbar ist.

10. Transportbehälter nach Anspruch 9, **dadurch gekennzeichnet, daß** zwei senkrecht zur Verschwenkrichtung nebeneinander angeordnete Pfosten (6) durch Metallbleche (37) miteinander verbunden sind.

## Claims

1. Joint for forming a swivel connection between two components, in particular between the upper and lower part of pillars (6) of a collapsible transport container (5), with a long base component (2, 2') which has a connecting section (9) for rigid securing to one of the components as well as a head section (10) with a free end (11, 11'), and with a swivel component (33') which has a connecting section for rigid securing on the other component, a support surface, 21, 21') for support on the free end (11, 11') of the head section (10) of the base component (2, 2') as well as a swivel arm (22, 22') which can be inserted lengthwise fully in the base component (2, 2') and is mounted in the base component (2, 2') in such a way that it can be swivelled around a bearing bolt fixed therein wherein the swivel component (3, 3') can be pulled out of the base component by a given withdrawal stretch and in the perimeter area of the base component (2, 2') a slot (12, 12') extending from its free end to its connecting section (9) is formed through which the swivel arm can be guided
**characterised in that**
when the swivel component (3, 3') and base component (2, 2')) are placed completely inside each other the swivel arm (22, 22') extends into the connecting section (9) of the base component (2, 2') and at least in both end areas of the insertion length the swivel arm (22, 22') and base component (2, 2') are provided with opposite-lying, conical areas (13, 17, 13', 31) lying parallel to each other and widening to the free end of the base component (2, 2'),
that the position of the support surface (21, 21') on the swivel component (3, 3') is selected in such a way that the conical areas do not yet touch each other in the unburdened state of the joint (1, 1'), and
that
the distance parallel to the opening width of the slot (12, 12')) of the conical areas of the swivel arm (22, 22') from the support surface (21, 21') of the swivel component (3, 3') along the withdrawal stretch is greater than the opening width.

2. Joint according to claim 1 **characterised in that** the base component (2, 2') and the swivel component (3, 3') each have a rectangular cross-section with conical areas running both parallel and perpendicular to the swivel direction.

3. Joint according to claim 2 **characterised in that** the angle of inclination of the areas running parallel to the swivel direction is larger than that of the areas running perpendicular to the swivel direction.

4. Joint according to one of the claims 1 to 3
**characterised in that** the swivel arm (22) has an oblong hole (23) running along its longitudinal direction which is run through by a bearing bolt (16) fixed in the base component (2) wherein the length of the oblong hole (23) is designed to facilitate the given withdrawal stretch.

5. Joint according to one of the claims 1 to 3
**characterised in that** two bearing bolts (16') aligned with each other and running in a contrary way perpendicular to the swivel direction are formed on the swivel arm (22') and these bearing bolts (16') are mounted in a sliding way in guides (32) respectively formed in the base component (2') wherein the bearing bolts (16') lie against end stops (33) when the given withdrawal stretch is reached, and
that the swivel arm (22') is provided on its rear side facing away from the slot (12') with a cut-out section (25) whose first edge (27) runs approximately from the height of the bearing bolt (16') at about 15° to 30° linear to the middle of the swivel arm (22') in the direction of the support surface (21') and is provided for lying against the opposite-lying inner wall of the base component and whose second edge (28) runs from the first edge (27) at around 90° upwards back to the rear side wherein at the intersection of the two edges (27, 28) a nose (26) is formed which upon the first edge (27) lying against the inner wall of the base component (2') overlaps its free end (11').

6. Joint according to claim 5 **characterised in that** in the free end area (11') of the base component (2') on both sides of the slot (12') and separated from this by a wall (34) recesses (35) are formed which open in the swivel direction towards the interior of the base component (2') and into which a shoulder (36) formed on the swivel arm (22') projects upon support of the support surface (21') of the swivel component (3') on the free end (11') of the base component (2').

7. Joint according to one of the claims 1 to 6 **characterised in that** the section of the swivel arm (22, 22') passing through the slot (12, 12') during swivelling of the swivel component (3, 3') is formed at least partly conically and the form of the slot (12, 12') corresponds to the profile of this section.

8. Joint according to one of the claims 1 to 7 **characterised in that** the base component (2, 2') and the swivel component (3, 3') are manufactured from malleable cast iron.

9. Collapsible transport container with a rectangular floor and a pillar on each corner of the floor **characterised in that** each pillar (6) has a joint (1, 1') according to one of the claims 1 to 8 and a part (7) of each pillar (6) can be swivelled towards the middle of the floor.

10. Collapsible transport container according to claim 9 **characterised in that** two pillars (6) arranged beside one another perpendicular to the swivel direction are connected with each other through metal sheets (37).

## Revendications

1. Articulation pour réaliser une liaison articulée entre deux éléments de construction, notamment entre la partie supérieure et la partie inférieure de montants (6) d'un conteneur de transport pliable (5), comprenant un élément de base (2, 2') allongé muni d'un segment de raccordement (9) pour le fixer à l'un des éléments de construction et d'un segment supérieur (10) avec une extrémité libre (11, 11'), comprenant également un élément pivotant (3, 3') qui présente un segment de raccordement pour le fixer à l'autre élément de construction, une surface d'appui (21, 21') destinée à reposer sur l'extrémité libre (11, 11') du segment supérieur (10) de l'élément de base (2, 2'), ainsi qu'un bras pivotant (22, 22') pouvant être enfoncé longitudinalement en totalité dans l'élément de base (2, 2') et monté dans l'élément de base (2, 2') de manière à pouvoir pivoter autour d'un axe (16, 16') immobilisé dans ce dernier, sachant que l'élément pivotant (3, 3') peut être déployé de manière télescopique hors de l'élément de base (2, 2') sur une distance prédéfinie et que dans le pourtour de l'élément de base (2, 2') est réalisée une fente (12, 12') s'étendant à partir l'extrémité libre (11, 11') de ce dernier vers son segment de raccordement (9), à travers laquelle il est possible de faire passer le bras pivotant (22, 22'), **caractérisée en ce que**, lorsque l'élément pivotant (3, 3') et l'élément de base (2, 2') sont entièrement emboîtés l'un dans l'autre, le bras pivotant (22, 22') s'étend jusque dans le segment de raccordement (9) de l'élément de base (2, 2') et **en ce qu'**au moins dans les deux zones d'extrémité de la longueur d'emboîtement, le bras pivotant (22, 22') et l'élément de base (2, 2') sont munis de surfaces (13, 17, 13', 31) coniques en regard, parallèles entre elles et s'élargissant en direction de l'extrémité libre (11) de l'élément de base (2, 2'), **en ce que** la situation de la surface d'appui (21, 21') sur l'élément pivotant (3, 3') est choisie de telle sorte que, lorsque l'articulation n'est pas chargée, les surfaces coniques (3, 3') manquent juste de se toucher, et **en ce que** l'écart entre les surfaces coniques du bras pivotant (22, 22'), qui est parallèle à la largeur de la fente (12, 12'), est supérieur à la largeur de la fente à partir de la surface d'appui (21, 21') de l'élément pivotant (3, 3') le long de la distance de déploiement télescopique.

2. Articulation selon la revendication 1, **caractérisée en ce que** l'élément de base (2, 2') et l'élément pivotant (3, 3') présentent chacun une section transversale rectangulaire, avec aussi bien des surfaces coniques s'étendant parallèlement à la direction de pivotement que des surfaces coniques s'étendant perpendiculairement à la direction de pivotement.

3. Articulation selon la revendication 2, **caractérisée en ce que** l'angle d'inclinaison des surfaces s'étendant parallèlement à la direction de pivotement est supérieur à celui des surfaces s'étendant perpendiculairement à la direction de pivotement.

4. Articulation selon l'une des revendications 1 à 3, **caractérisée en ce que** le bras pivotant (22) présente un trou oblong (23) s'étendant le long de sa direction longitudinale, qui est traversé par un axe (16) fixé dans l'élément de base (2), sachant que la longueur du trou oblong (23) est conçue pour permettre de déployer l'élément pivotant sur la distance prédéfinie.

5. Articulation selon l'une des revendications 1 à 3, **caractérisée en ce que** deux axes (16') alignés l'un sur l'autre et s'étendant dans des sens opposés, perpendiculairement à la direction de pivotement, sont ménagés sur le bras pivotant (22'), qui sont chacun montés de façon coulissante dans des glissières (32) réalisées dans l'élément de base (2'), sachant que les axes (16') viennent s'appliquer contre leur butée d'extrémité respective (33) lorsque la distance de déploiement prédéfinie est atteinte, et **en ce que** le bras pivotant (22') est muni sur sa face arrière opposée à la fente (12') d'une découpe (25) dont le premier bord (27) s'étend, approximativement à partir des axes (16'), de façon rectiligne avec un angle d'environ 15° à 30° vers le milieu du bras pivotant (22'), en direction de la surface d'appui (21'), et est destiné à venir s'appliquer contre la paroi intérieure de l'élément de base, et dont le second bord (28) remonte environ à 90° à partir du premier bord (27) en direction de la face arrière, sachant qu'à l'intersection des deux bords (27, 28) est réalisée une saillie (26) qui, lorsque le premier bord (27) est appliqué contre la paroi intérieure de l'élément de base (2'), est en prise avec le bord libre (11') de ce dernier.

6. Articulation selon la revendication 5, **caractérisée en ce que** des évidements (35) sont réalisés dans la surface d'extrémité libre (11') de l'élément de base (2'), de part et d'autre de la fente (12') et séparés de celle-ci par une paroi (34), qui sont ouverts vers l'intérieur de l'élément de base (2') dans la direction de pivotement et dans lesquels pénètre chaque fois une saillie (36) réalisée sur le bras pivotant (22') lorsque la surface d'appui (21') de l'élément pivotant (3') repose sur l'extrémité libre (11') de l'élément de base (2').

7. Articulation selon l'une des revendications 1 à 6, **caractérisée en ce que** le segment du bras pivotant (22, 22') qui traverse la fente (12, 12') lorsque l'élément pivotant (3, 3') pivote est réalisé au moins en partie de façon conique, et **en ce que** la forme de la fente (12, 12') correspond au profil de ce segment.

8. Articulation selon l'une des revendications 1 à 7, **caractérisée en ce que** l'élément de base (2, 2') et l'élément pivotant (3, 3') sont fabriqués en fonte malléable.

9. Conteneur de transport pliable comprenant un fond rectangulaire et un montant à chaque angle du fond, **caractérisé en ce que** chaque montant (6) présente une articulation (1, 1') selon l'une des revendications 1 à 8 et **en ce qu'**une partie (7) de chaque montant (6) peut pivoter en direction du milieu du fond.

10. Conteneur de transport selon la revendication 9, **caractérisé en ce que** deux montants (6) disposés côte à côte perpendiculairement à la direction de pivotement sont reliés entre eux par des tôles métalliques (37).
